**Europäisches Patentamt**

**European Patent Office**

**Office européen des brevets**

(19)

(11) Veröffentlichungsnummer: **0 201 771**
**B1**

(12) # EUROPÄISCHE PATENTSCHRIFT

(45) Veröffentlichungstag der Patentschrift:
19.07.89

(51) Int. Cl.⁴: **H01G 4/32, H01G 4/34**

(21) Anmeldenummer: **86105625.7**

(22) Anmeldetag: **23.04.86**

(54) **Elektrischer Kondensator aus einem verfestigten Wickel und Verfahren zu seiner Herstellung.**

(30) Priorität: **14.05.85 DE 3517435**

(43) Veröffentlichungstag der Anmeldung:
**20.11.86 Patentblatt 86/47**

(45) Bekanntmachung des Hinweises auf die Patenterteilung:
**19.07.89 Patentblatt 89/29**

(84) Benannte Vertragsstaaten:
**AT BE CH DE FR GB IT LI NL SE**

(56) Entgegenhaltungen:
**DE-A- 1 439 622**
**DE-A- 1 940 036**
**GB-A- 874 940**
**GB-A- 1 149 838**

(73) Patentinhaber: **Siemens Aktiengesellschaft Berlin und München, Wittelsbacherplatz 2, D-8000 München 2(DE)**

(72) Erfinder: **Behn, Reinhard, Dipl.-Phys., Frasdorferstrasse 6 d, D-8000 München 90(DE)**

## Beschreibung

Die Erfindung betrifft einen elektrischen Kondensator aus einem verfestigten Wickel mit kreisrundem, ovalem oder flachem Querschnitt aus mit je einer regenerierfähig dünnen Metallschicht als Belegung versehenen, miteinander verwickelten Dielektrikumsbändern aus gereckten Kunststofffolien, bei denen die Belegungen von Band zu Band abwechselnd zu unterschiedlichen Rändern reichen, die Flächen bilden, auf denen die gegenpoligen Belegungen mit zur Kontaktierung dienenden, aufgeschoopten Metallschichten miteinander verbunden sind, an denen Stromzuführungen befestigt sind.

Die Erfindung betrifft ferner ein Verfahren zur Herstellung eines solchen elektrischen Kondensators, bei dem einseitig wenigstens bis zu einem Rand metallisierte Bänder aus gereckten Kunststofffolien als Dielektrikum, insbesondere mit randseitigem Wellenschnitt, auf einen Wickeldorn mit kreisrundem, ovalem oder flachem Querschnitt gewickelt werden, der gebildete Wickel dann gegebenenfalls vom Wickeldorn befreit wird und der so entstandene Wikkelkondensator mit Stirnkontaktschichten versehen wird.

Elektrische Wickelkondensatoren dieser Art und Verfahren zu ihrer Herstellung mit den oben angegebenen Verfahrensschritten sind seit vielen Jahrzehnten hinreichen bekannt. Als gereckte Kunststofffolien werden dabei solche aus Polycarbonaten, Polyethylenterephthalat oder Polypropylen eingesetzt, und das Anbringen der der Kontaktierung der einzelnen Belegungen dienenden Metallschichten auf beiden Stirnseiten erfolgt dabei durch das weithin bekannte Schoop-Verfahren.

In der nicht vorveröffentlichten EP-A2 0 144 857 ist ein elektrischer Kondensator aus einem verfestigten Stapel von mit je einer Metallschicht als Belegung versehenen, aneinander geschichteten Dielektrikumslagen aus Kunststofffolien beschrieben, der an einer Schmalseite einen Einschnitt aufweist, durch den die einzelnen Dielektrikumslagen Vorsprünge erhalten, auf denen abwechselnd von Lage zu Lage die Belegungen durch Isolierstreifen unterbrochen sind, so daß die auf den von den Vorsprüngen gebildeten Flächen befindlichen Metallisierungen gegenpolige Belegungen alternierend miteinander verbinden. Das in dieser DE-OS beschriebene Verfahren sieht vor, metallisierte Kunststoffbänder mit entsprechend angeordneten intermittierenden metallfreien Streifen zu versehen und dabei oder danach auf eine Trommel aufzuwickeln, wonach in die entstehenden Mutterkondensatoren die erwähnten Einschnitte erzeugt und danach die einzelnen Stapel von den Mutterkondensatoren abgetrennt werden.

Der elektrische Schicht- oder Stapelkondensator der genannten EP-A2 ist extrem induktionsarm, weil die Stromverläufe über die Metallbelegungen durch das Dielektrikum hindurch und auf den gegenpoligen Belegungen jeweils in entgegengesetzter Richtung zueinander laufen, so daß diese Stromverläufe kompensiert sind und damit ein Magnetfeld (Induktion) nicht erzeugen können.

Als induktionsarme Wickelkondensatoren sind bisher im wesentlichen nur solche bekannt, deren Dielektrikum aus insbesondere gerecktem Polystyrol besteht und dessen Belegungen in Form selbsttragender Metallfolien vorliegen, die mit den Polystyrolfolien verwickelt sind. Zur Erzielung geringer Induktivität werden die äußeren Stromzuführungselemente mit den Metallfolien derart verbunden, daß die Stromverläufe in den Metallfolien sich gegenseitig kompensieren, beispielsweise indem die Stromzuführung zur einen Metallfolie möglichst nahe oder im Zentrum des Wikkels und die andere Stromzuführung mit der anderen Metallfolie an der Peripherie des Wickels verbunden sind (bifilarer Aufbau).

Induktionsarme elektrische Wickelkondensatoren mit Dielektrikumsbändern, auf denen eine regenerierfähig dünne Metallisierung aufgetragen ist, sind bisher entweder nicht bekannt oder haben in der Praxis keine Anwendung gefunden.

Der vorliegenden Erfindung liegt die Aufgabe zugrunde, einen elektrischen Wickelkondensator der eingangs angegebenen Art anzugeben, der induktionsarm ist, der ferner ein möglichst geringes Rastermaß zwischen den Stromzuführungselementen, beispielsweise 2,5 mm ermöglicht und dessen Herstellung auch als Massenprodukt dennoch einfach ist. Der Erfindung liegt ferner die Aufgabe zugrunde, ein Verfahren zur Herstellung solcher Kondensatoren anzugeben.

Zur Lösung dieser Aufgabe ist der elektrische Kondensator der eingangs angegebenen Art erfindungsgemäß gekennzeichnet durch die Merkmale:

a) die Belegungen reichen von Band zu Band abwechselnd bis zu den Enden von zwei Vorsprüngen, die durch einen Einschnitt in einer Stirnfläche entstanden sind, der in Richtung der Längsachse des Wickels etwa in der Mitte der Stirnflächen verläuft,

b) die von den Enden der Vorsprünge im verfestigten Wickel gebildeten Flächen sind mit den zur Kontaktierung dienenden Metallschichten versehen,

c) alternierend von Dielektrikumsband zu Dielektrikumsband sind die Vorsprünge mit metallfreien Isolierstreifen versehen, wobei die Tiefe des Einschnittes entweder größer ist als die Breite des durch die Isolierstreifen gebildeten Restmetallstreifens oder mit den inneren Rändern der Isolierstreifen zusammenfällt oder vorzugsweise über diese Ränder hinaus in den Wickel hineinreicht.

Vorzugsweise sind die die Dielektrikumsbänder bildenden gereckten Kunststofffolien 1 bis 15 μm dick. Das Material, aus dem diese Kunststofffolien bestehen, ist Polycarbonat, Polypropylen und vorzugsweise Polyethylenterephthalat.

In der im einleitenden Teil bereits erwähnten EP-A2 0 144 857 sind unter Hinweis auf den umfangreichen Stand der Technik mehrere Verfahren angegeben, durch die die Schnittkanten, im vorliegenden Fall des Einschnittes, eine ausreichende Isolation gewährleisten. So erfolt gemäß dem in der hier nur als Beispiel herangezogenen DE-PS 17 64 548 beschriebenen Verfahren, bei dem gereckte Kunststoffolien aus den genannten Materialien verwendet werden, die mit einem regenerierfähig dünnen Belag aus Ventilmetall, z. B. Aluminium oder Zink, versehen sind, durch einen Sägevorgang eine teilweise Entreckung der Kunststoffolie im Randbereich, durch die dort der Zusammenhang des Ventilmetalls gestört, gegebenenfalls unter dem Einfluß der Luft oxydiert wird und zu Inseln zusammenschrumpft. Dadurch wird die Isolationsstrecke über die Dicke der Kunststoffolie hinaus auf die Fläche derselben verlängert, so daß, insbesondere bei der üblicherweise anzuwendenden Ausheilung von Fehlstellen mittels erhöhter Spannung, die Randisolation wesentlich erhöht wird und dann der praktische Gebrauch der Kondensatoren sogar bei relativ hohen Spannungen (z.B. bei 350 V) möglich ist.

Von derartigen die Randisolation im Schneidkantenbereich erhöhenden Maßnahmen, die zum Stand der Technik gehören, wird auch bei der Herstellung des Kondensators der vorliegenden Erfindung Gebrauch gemacht (vgl. neben der DE-PS 17 64 548 auch die DE-PSen 17 64 549 und 25 26 130).

Es ist ferner vorteilhaft, wenn die Dielektrikumsbänder im Bereich der oberen Stirnfläche des Wickels metallfreie Streifen aufweisen.

Diese metallfreien Streifen stellen sicher, daß auch im Bereich der dem Einschnitt gegenüberliegenden Stirnfläche eine ausreichende Isolation zwischen den Belegungen vorhanden ist. Für den Fall, daß die als Belegungen dienenden Metallschichten bis zur Stirnfläche reichen, kann die Randisolation durch die beschriebenen Methoden verbessert werden.

Der erwähnte randseitige Wellenschnitt dient hier, wie beispielsweise auch in der DE-PS 24 16 566 beschrieben, zur Erhöhung der mechanischen Festigkeit und der elektrischen Verbindung zwischen den Belegungen und den an den Flächen der Vorsprünge angebrachten Metallschichten, wobei die Zahl der Wellen geringer ist als die Länge der zu kontaktierenden Kanten und die Frequenz der Welligkeit benachbarter Folienlagen auch unterschiedlich sein kann.

An den Metallschichten, die der Kontaktierung der gegenpoligen Belegungen dienen, sind in Richtung der Längsachse des Wickels sich erstreckende Stromzuführungsdrähte befestigt. Für den Einbau des Kondensators in Chipbauweise können an den genannten Metallschichten Stromzuführungen aus lötfähigem Material befestigt sein, die gegebenenfalls auch kappenförmig ausgebildet sind und dann die aus den Vorsprüngen des Wickels gebildeten Füße umschließen.

Ein weiterer Vorteil besteht darin, daß die Kapazität des Wickelkondensators durch die Breite und/oder die Tiefe des Einschnittes auf einen gewünschten, eng tolerierten Wert abgeglichen werden kann.

Der elektrische Kondensator enthält gemäß einer Weiterbildung der Erfindung Leerwindungen und Windungen als Decklagen , auf denen die Metallisierung der Bänder durch wenigstens einen metallfreien, quer verlaufenden Isolierstreifen und durch in Wickelrichtung durchgehende metallfreie Isolierstreifen mit den Metallschichten auf den Vorsprüngen elektrisch nicht verbunden sind.

Das Verfahren der eingangs angegebenen Art zur Herstellung eines Kondensators der Erfindung ist zur Lösung der Aufgabe gekennzeichnet durch die Verfahrensschritte

a) es werden metallisierte Bänder auf den Wickeldorn gewickelt, die je an einem Rand gegebenenfalls durchgehende metallfreie Streifen aufweisen, während in den Bereichen der gegenüberliegenden Ränder und in Abständen hierzu in Wickelrichtung intermittierende metallfreie Isolierstreifen vor oder beim Aufwickeln derart erzeugt werden, daß die Isolierstreifen beim Aufwickeln auf die Trommel in einer Ebene senkrecht zur Wickelachse liegen und sowohl die Enden als auch die Anfänge der Isolierstreifen bis in den Bereich des späteren Einschnittes hineinreichen oder diesen Bereich geringfügig überschreiten,

b) die Bänder werden beim Aufwickeln auf den Wickeldorn so geführt und die vor oder beim Aufwickeln erzeugten Isolierstreifen werden hinsichtlich ihrer Länge derart bemessen, daß die Mitten der Isolierstreifen des oberen Bandes den Mitten der Isolierstreifen des unteren Bandes im Wickel symmetrisch einander gegenüberstehen,

c) nach der Fertigstellung des Wickels wird auf die den Isolierstreifen benachbarte Stirnfläche eine zur Kontaktierung dienende Metallschicht aufgetragen und dann in diese Stirnfläche senkrecht zur Verbindungslinie zwischen den Mitten der Isolierstreifen und in Richtung der Längsachse des Wickels ein Einschnitt erzeugt, durch dessen Breite und Tiefe die beiden Vorsprünge entstehen,

d) Fertigstellung des Wickelkondensators durch Anlegen einer erhöhten Spannung zum Ausheilen von Fehlstellen im Inneren des Wickels und an den Rändern von Schneidkanten sowie Befestigung von Stromzuführungen an den Metallschichten der Vorsprünge.

Eine besondere Ausführungsform dieses Verfahrens ist erfindungsgemäß dadurch gekennzeichnet, daß die beim Verfahrensschritt a) auf den Wickeldorn aufzuwickelnden Bänder jeweils an beiden Rändern mit den intermittierenden metallfreien Isolierstreifen versehen werden, so daß ein Wickel für zwei Kondensatoren entsteht, der nach Beendigung des Wickelvorganges in diese beiden Kondensatoren längs einer Schneidlinie aufgeteilt wird.

Bei dieser Ausführungsform ist es vorteilhaft, wenn die aufzuwickelnden metallisierten Bänder in der Mitte mit durchgehenden metallfreien Streifen versehen sind.

Das Herstellen des Einschnittes erfolgt vorzugsweise mittels einer Säge, so daß bei diesem Sägevorgang die erforderlichen verlängerten Isolationsstrecken an den Rändern der Schneidkante entstehen. Etwa noch vorhandene Fehlstellen im Inneren des Wickels und insbesondere an den Schneidkanten werden in an sich bekannter Weise durch Anlegen einer Spannung ausgeheilt, die höher ist als die Nennspannung, bei der der Kondensator später betrieben werden soll.

Werden bei einem Wickelvorgang aus einem Band gleichzeitig zwei Wickelkondensatoren hergestellt, so ist die Isolation an der dem Einschnitt gegenüberliegenden Stirnfläche entweder durch einen auf wenigstens einem der Bänder bereits vorhandenen Isolierstreifen gewährleistet oder die erforderlichen über die Kanten auf die Flächen hinaus verlängerten Isolationswege werden ebenfalls durch den Sägevorgang in an sich bekannter Weise bewirkt.

Vorzugsweise wird die Herstellung der intermittierenden metallfreien Isolierstreifen auf den Bändern durch Anwendung von Laserstrahlen oder durch Einsatz von Abbrennrädern vorgenommen, wobei zur Erzielung der gewünschten Lage und Länge der Isolierstreifen untereinander und auch in bezug auf ihre Anordnung im Wickel bei zunehmendem Radius die Laserimpulse beziehungsweise die Abbrenntakte der Abbrennräder synchron mit der Drehung des Wickeldorns gesteuert werden.

Dielektrisch nicht wirksame Leerwindungen im Inneren des Wickels und Wicklungen als Decklagen, beispielsweise zum Schutz vor mechanischen Beanspruchungen oder zur Abschirmung von Störspannungen, können erzeugt werden, indem auf den Wickeldorn zunächst einige Leerwindungen der metallisierten Bänder aufgewickelt werden, die im Bereich der späteren intermittierenden metallfreien Isolierstreifen mit durchgehenden metallfreien Streifen versehen werden, daß dann wenigstens ein quer über zumindest ein Band verlaufender metallfreier Isolierstreifen erzeugt wird und anschließend im gleichen Wickelvorgang die Herstellung der intermittierenden Isolierstreifen erfolgt. In gleicher Weise werden zur Erzeugung von als Decklagen dienenden Wicklungen um den Wickelkondensator auf den metallisierten Bändern anschließend an die intermittierenden metallfreien Isolierstreifen zunächst wenigstens ein quer über zumindest ein Band verlaufender metallfreier Isolierstreifen und anschließend im Bereich der intermittierenden Isolierstreifen im gleichen Wickelvorgang durchgehende metallfreie Isolierstreifen erzeugt. Durch die quer verlaufenden und die in Wickelrichtung verlaufenden Isolierstreifen sind die Metallschichten auf den Dielektrikumsbändern im Bereich der Leerwicklungen und der Decklagen mit den Restmetallstreifen im fertigen Kondensator elektrisch nicht mehr verbunden.

Durch dieses Verfahren können, im Gegensatz zum bisher bekannten Stand der Technik, beliebig viele Leerwicklungen und Windungen als Decklagen erzeugt werden.

Ein bevorzugt anwendbares Verfahren zur Erzeugung der intermittierenden und insbesondere der durchgehenden metallfreien Isolierstreifen ist in der nicht vorveröffentlichten DE-OS 35 14 842 (angemeldet am 24.04.1985) in allen Einzelheiten beschrieben.

Die durch die Erfindung erzielten Vorteile bestehen in erster Linie darin, daß diese Wickelkondensatoren weitgehend induktionsarm sind. Darüber hinaus können Rastermaßabstände zwischen den Stromzuführungsdrähten von 2,5 mm erreicht werden, ohne daß diese Stromzuführungsdrähte durch entsprechendes Verbiegen auf ein solches Rastermaß eingestellt werden müssen.

Die Kondensatoren sind besonders einfach herstellbar, weil praktisch nur während des Wickelvorganges die intermittierenden metallfreien Isolierstreifen erzeugt zu werden brauchen.

Für die Vorteile und die bessere Handhabung der Erfindung sei je ein Beispiel für Kondensatoren mit einer Kapazität von 220 nF für ein Rastermaß von 2,5 mm angegeben:

Für zum Stand der Technik gehörende Wickelkondensatoren, die an den beiden gegenüberliegenden Stirnflächen kontaktiert und deshalb nicht induktionsarm sind, werden Kunststoffolien mit einer Breite von 2,3 mm verwendet, wobei die Wickelabmessungen für einen flachen Wickel wie folgt sind: Länge in Wickelachsenrichtung 2,4 mm, Breite 5 mm und Dicke 1,5 mm. Diese Kondensatoren werden in entsprechende Becher eingebaut.

Niederinduktive Wickelkondensatoren gemäß der vorliegenden Erfindung können für Becher mit gleichen Abmessungen wie für die bekannten Kondensatoren mit Kunststoffolien einer Breite von 10,5 mm für einen Doppelwickel verwickelt werden, wobei folgende Wickelabmessungen erzielt werden: Länge in Wickelachsenrichtung 10,2 mm, Breite 3,6 mm und Dicke 1,5 mm. Die wesentlich größeren Abmessungen des Wickels, insbesondere eines Doppelwickels, ermöglichen eine wesentlich bessere Handhabung insbesondere beim Aufbringen der Kontaktmetallschichten mittels Schoop-Verfahren.

Die regenerierfähig dünnen Metallschichten auf den Dielektrikumsbändern können bei Bedarf am Anfang und am Ende der zu verwickelnden Kunststoffolien in bekannter Weise durch Abschleifen oder Abtrennen entfernt werden, damit eine gewünschte Isolation erreicht wird. Es ist aber auch möglich, mit einem Laserstrahl einen metallfreien Isolierstreifen quer über die Folienbreite zu erzeugen, und zwar am Folienanfang und am Folienende.

Die Erfindung wird nachfolgend anhand der Figuren näher erläutert.

Es zeigen

Fig. 1 einen Wickelkondensator mit rundem Querschnitt, perspektivisch,
Fig. 2 eine Draufsicht auf den Wickel nach Fig. 1 in Richtung des Einschnittes,
Fig. 3 die oberen Lagen des Wickels nach Fig. 1 im entrollten Zustand,
Fig. 4 den Wickelvorgang zur Herstellung eines Rundwickels
Fig. 5 den Wickelvorgang zur Herstellung zweier Wickel mit ovalem Querschnitt,
Fig. 6 einen Schnitt längs der Linie VI-VI in Fig. 2, allerdings für einen Wickel mit ovalem Querschnitt,
Fig. 7 einen Kondensator mit flachem Querschnitt, wobei ein Doppelwickel angedeutet ist.

Gleiche oder einander entsprechende Teile in den Zeichnungen sind mit gleichen Bezugszeichen versehen.

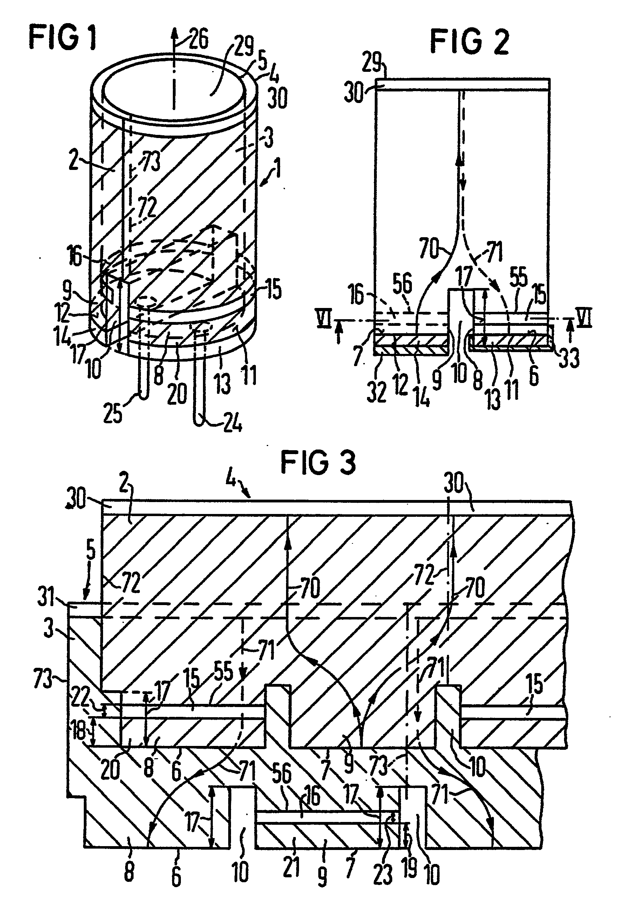

Der elektrische Kondensator gemäß Fig. 1 besteht aus einem verfestigten kreisrunden Wickel 1, der aber auch ovalen oder flachen Querschnitt aufweisen kann. Verfestigt bedeutet hier, daß entweder bereits beim Wickeln für eine ausreichende Wickelspannung durch entsprechenden Wickelzug gesorgt wird oder daß die fertigen Wickel oder erst die Wickelkondensatoren einem kurzen Tempervorgang unterworfen werden.

Die Belegung 2 ist auf dem Dielektrikumsband 4 regenerierfähig dünn aufgetragen, während als Gegenbelegung die Belegung 3 regenerierfähig dünn auf dem Dielektrikumsband 5 aufgetragen ist. Als Metall für die Belegung dient vorzugsweise Aluminium allein oder legiert mit anderen Metallen.

In der der oberen Stirnfläche 29 gegenüberliegenden Stirnfläche ist in Richtung der Längsachse 26 ein Einschnitt 10 vorhanden, der den Wickel 1 in diesem Stirnflächenbereich in zwei Vorsprünge 8 und 9 aufteilt. Die Enden 6 und 7 der Vorsprünge 8 und 9 bilden zwei Flächen 11 und 12, auf denen Metallschichten 13 und 14 aufgebracht sind, und zwar insbesondere durch das an sich bekannte Metallspritzverfahren (Schoop-Verfahren).

Durch die metallfreien Isolierstreifen 15 und 16 sind die Belegungen 2 und 3 auf den Dielektrikumsbändern 4 und 5 alternierend von Wickellage zu Wickellage von den der Kontaktierung dienenden Metallschichten 13 und 14 isoliert.

In Fig. 2 ist gezeigt, daß die Stromwege 70 auf der oberen Belegung von der Metallschicht 14 ausgehend in Pfeilrichtung nach oben verlaufen, während auf der nächstfolgenden Belegung der nächsten Dielektrikumslage die Stromwege in entgegengesetzter Richtung, nämlich nach unten zur Metallschicht 13 verlaufen. Aufgrund dieser gegenläufigen Ausbreitung der Stromwege kompensieren sich diese gegenseitig, so daß ein eine Induktion hervorrufendes Magnetfeld sich nicht aufbauen kann.

Während in Fig. 1 an den Metallschichten 13 und 14 Stromzuführungsdrähte 24 und 25 beispielsweise durch Lötung oder Schweißung befestigt sind, ist in Fig. 2 gezeigt, daß für den Einbau eines solchen Kondensators auch einfache lötfähige Metallschichten 32 aufgebracht sein können, und zwar an beiden Vorsprüngen 8 und 9, oder daß an beiden Vorsprüngen 8 und 9 diese lötfähigen Metallschichten auch kappenförmig ausgebildet sein können, die den Vorsprung kappenförmig umschließen. In dieser Weise kann der Kondensator an den Kontaktstellen einer gedruckten Schaltung auch ohne Verwendung von Anschlußdrähten befestigt werden (Chipbauweise).

In Fig. 3 sind zwei entrollte Lagen des Kondensators nach Fig. 1 gezeigt, die entstehen würden, wenn die metallisierte Dielektrikumslage 4 längs der Linie 72 und die metallisierte Dielektrikumslage 5 längs der Linie 73 aufgeschnitten und dann der Kondenator entrollt würde.

Die Dielektrikumsbänder 4 und 5 weisen in ihrem oberen Bereich metallfreie Isolierstreifen 30 und 31 auf, deren Wirkung und deren Zweck oben bereits beschrieben sind. Auf dem zum Vorsprung 8 gehörenden Teil des Dielektrikumsbandes 4, der in der Zeichnung links gezeigt ist, ist ein metallfreier Isolierstreifen 15 gezeigt, durch den ein Restmetallstreifen 20 entstanden ist. Die Tiefe 17 des Einschnittes 10 ist im vorliegenden Falle größer als die Summe der Breiten 18 und 22 des Restmetallstreifens 20 und des metallfreien Isolierstreifens 15. Die Tiefe 17 muß in jedem Fall mindestens größer sein als die Breite 18 des Restmetallstreifens 20, denn erst dann ist die Belegung 2 vom Ende 6 des Vorsprunges 8 elektrisch isoliert.

Auf dem Vorsprung 8 reicht die Belegung 2 des Dielektrikumsbandes 4 bis zum oberen Rand 55 des metallfreien Isolierstreifens 15, während sie auf dem Vorsprung 9 bis zum Ende 7 reicht.

Demgegenüber reicht die Belegung 3 des Dielektrikumsbandes 5 auf dem Vorsprung 8 bis zum Ende 6 und auf dem Vorsprung 9 nur bis zum oberen Rand 56 des metallfreien Isolierstreifens 16. Zwischen dem Ende 7 und diesen metallfreien Isolierstreifen 16 befindet sich der Restmetallstreifen 21. Die Tiefe 17 des Einschnittes 10 ist hier ebenfalls größer als die Summe der Breiten 19 und 23 des Restmetallstreifens 21 und des metallfreien Isolierstreifens 16.

In Fig. 3 ist auch der Verlauf der Stromwege 70 auf der Belegung 2 des Dielektrikumsbandes 4 und der Stromwege 71 auf der Belegung 3 des Dielektrikumsbandes 5 dargestellt, woraus deutlich wird, daß der Kondensator nahezu induktionsfrei arbeiten kann.

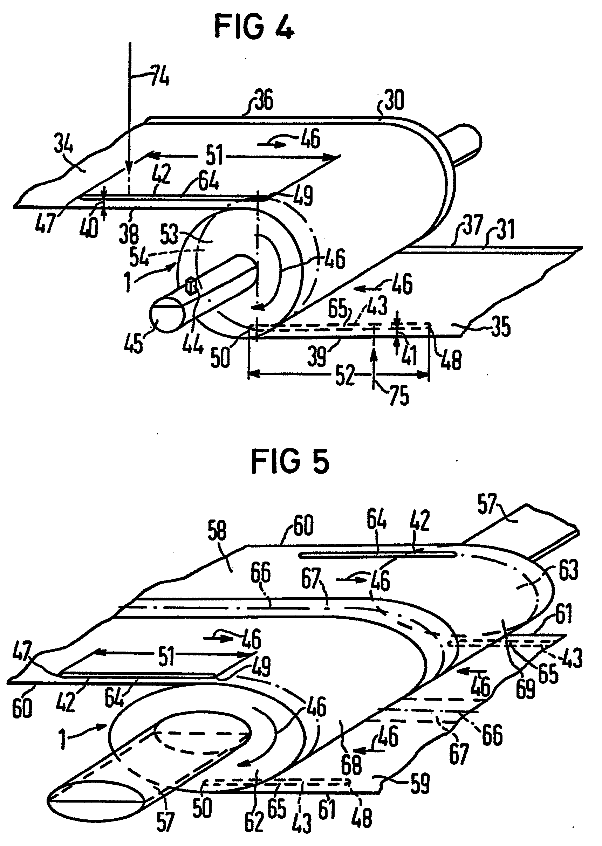

Anhand der Fig. 4 soll das Herstellungsverfahren näher erläutert werden.

Ein oberes Band 34 und ein unteres Band 35, die jeweils bis zu den Rändern 38 und 39 metallisiert sind, die hier an den gegenüberliegenden Rändern 36 und 37 metallfreie Isolierstreifen 30 und 31 aufweisen, werden auf den Wickeldorn 45 in Wickelrichtung 46 aufgewickelt. Für den Wickeldorn 45 ist angedeutet, daß er in Längsrichtung geteilt ist und aus einem oberen und einem unteren Teil besteht, wobei diese beiden Teile jeweils von der einen Stirnfläche zur gegenüberliegenden Stirnfläche verjüngend ausgebildet sind. Derartige zweigeteilte Wickeldorne sind bekannt und dienen zum einfacheren Entfernen des Wickeldornes aus dem Wickel.

Der Nocken 44 auf dem Wickeldorn 45 soll andeuten, daß die Vorrichtungen, mit 74 und 75 angedeutet, zur Herstellung der Isolierstreifen 42 auf dem Band 34, erzeugt von oben her, und der Isolierstreifen 43 auf dem Band 35, erzeugt von unten her, in Abhängigkeit von der Umdrehungsstellung des Wickeldornes 45 gesteuert werden. Die intermittierenden Isolierstreifen 42 und 43 werden in Abständen 40 und 41 von den Rändern 38 und 39 erzeugt.

Jeweils zur gleichen Zeit wird mit der Herstellung der Isolierstreifen 42 und 43 mit einer Versetzung um 180° an den Anfängen 49 beziehungsweise 50 dieser Isolierstreifen begonnen und nach einer halben Umdrehung des Wickeldornes 45 wieder an den Enden 47 und 48 beendet. Dann folgt eine Umdrehung des Wickeldorns um 180°, während der keine metallfreien Isolierstreifen erzeugt werden. Dadurch gelangen im fertigen Wickel die Mitten 64 und 65 der Isolierstreifen 42 und 43 um 180° versetzt in diametral gegenüberliegende Positionen.

Dieser Wickelvorgang wird so lange fortgesetzt, bis die notwendige Windungszahl für die gewünschte Kapazität erreicht ist.

Bereits für die ersten Windungen und auch für die letzten Windungen kann die Entmetallisierungsvorrichtung auf Dauerbetrieb geschaltet werden. Am Ende der Herstellungen der Leerwindungen und zu Begin der Windung für die Decklagen werden die oben beschriebenen quer verlaufenen metallfreien Isolierstreifen, z.B. durch entsprechende Steuerung der Laser oder durch mechanischen Antrieb bzw. durch elektrisches Abbrennen, erzeugt, so daß Wicklungen entstehen, deren Metallisierungen im fertigen Wickelkondensator miteinander nicht mehr elektrisch verbunden sind.

Nach dem Entfernen des Wickeldornes 45 aus dem Wickel 1 wird in den Stirnflächen 53, nach dem Auftragen einer der Kontaktierung dienenden Metallschicht 54, der Einschnitt 10 erzeugt,und zwar so, daß er in der Mitte zwischen den gegenüberliegenden Mitten 64 und 65 der metallfreien Isolierstreifen 42 und 43 verläuft und damit die beiden symmetrischen Vorsprünge 8 und 9 erzeugt.

Die Längen 51 und 52 der metallfreien Isolierstreifen 42 und 43 nehmen durch die umdrehungsgesteuerte Arbeitsweise der Entmetallisierungsvorrichtung mit zunehmendem Radius des Wickels zu.

In Fig. 5 ist eine besonders vorteilhafte Ausführungsform dieses Verfahrens gezeigt, wobei jedoch anstelle eines kreisrunden Wickeldornes ein Wickeldorn 57 mit ovalem Querschnitt vorhanden ist. Auf diesen Wickeldorn 57 werden in gleicher Weise, wie vorher beschrieben, metallisierte Bänder 58 und 59 aufgewickelt, die in der Mitte vorzugsweise metallfreie Isolierstreifen 67 aufweisen. Die Wickelrichtung ist hier ebenfalls mit 46 bezeichnet.

Bei dem Verfahren nach Fig. 5 werden die Bänder 58 und 59 jeweils an den beiden Rändern 60 beziehungsweise 61 mit den intermittierenden metallfreien Isolierstreifen 42 und 43 versehen, wobei auch hier in Abhängigkeit von der Drehung des Wickeldornes 57 die Erzeugung der metallfreien Isolierstreifen 42 und 43 bei 49 beziehungsweise 50 begonnen und bei 47 beziehungsweise 48 beendet wird. Die Wickelrichtung 46 ist hier die gleiche, wie auch in Fig. 4 gezeigt.

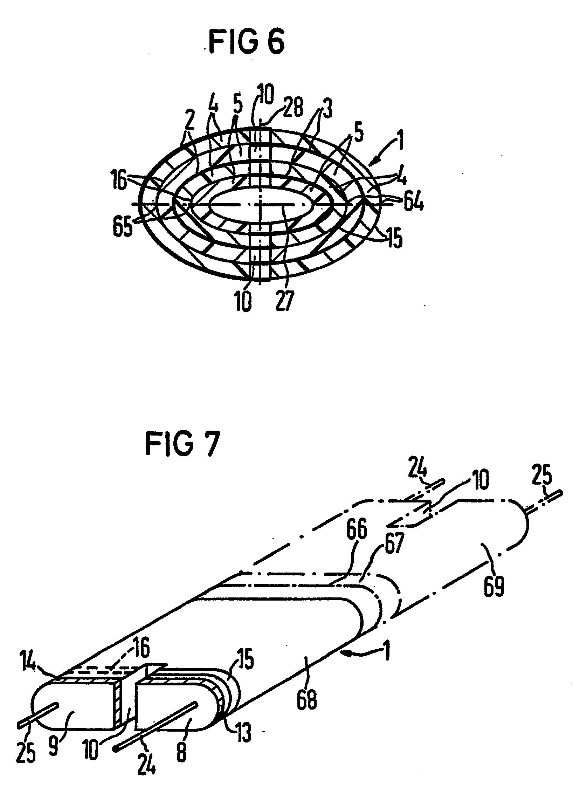

Nach dem Entfernen des Wickeldornes 57, der hier ebenfalls als zweigeteilter Wickeldorn gezeigt ist, aus dem Wickel 1 wird in die Stirnflächen 62 und 63 längs der kleinen Halbachse 28 der Einschnitt 10 erzeugt, wie dies in Fig. 6 verdeutlicht ist.

Die metallfreien Streifen 42 in den Fig. 4 und 5 entsprechen den metallfreien Streifen 15 in den Fig. 1, 2 und 3, während die metallfreien Streifen 43 in den Fig. 4 und 5 den metallfreien Streien 16 der Fig. 1, 2 und 3 entsprechen. Damit sind die Mitten 64 beziehungsweise 65 der metallfreien Streifen 42 und 43 im fertigen Wickel auch die Mitten der metallfreien Streifen 15 und 16.

Unter Berücksichtigung dieser Erläuterung wird aus Fig. 6 deutlich, wie der Schnitt VI-VI durch Fig. 2 zu verstehen ist. Zur Vereinfachung der Darstellung ist in Fig. 6 der in der Praxis selbstverständlich vorhandene spiralförmige Verlauf der einzelnen Windungen nicht gezeigt.

Auf den Dielektrikumsbändern 4 sind die Belegungen 2 und auf den Dielektrikumsbändern 5 sind die Belegungen 3 aufgetragen und im Schnitt als verdickte Linien kenntlich gemacht. Die metallfreien Isolierstreifen 15 und 16 auf den Bändern 4 (in Fig. 6 rechts gezeigt) und die metallfreien Isolierstreifen 16 auf den Dielektrikumsbändern 5 (in Fig. 6 links gezeigt) sind dagegen als dünnere Linien kenntlich gemacht. Die Mitten 64 beziehungsweise 65 der metallfreien Isolierstreifen 15 beziehungsweise 16 liegen auf der großen Halbachse 27 des im Querschnitt ovalen Wickels 1. Der Einschnitt 10 verläuft in Richtung der kleinen Halbachse 28.

In Fig. 7 ist ein Wickelkondensator aus einem Wickel 1 mit flachem Querschnitt gezeigt. Dieser Kondensator wird entweder auf einem flachen Wickeldorn hergestellt, wobei der Wickeldorn gegebenenfalls im Wickel verbleiben kann, der Wickel 1 kann aber auch hergestellt werden, indem die Dielektrikumsbänder zunächst auf einem Wickeldorn mit kreisrundem oder mit ovalem Querschnitt aufgewickelt werden, wonach nach Entfernen des Wickeldornes der Wickel flach gepreßt wird. Alle diese Techniken sind hinreichend bekannt und seit Jahrzehnten Stand der Technik.

Im vorliegenden Fall werden jedoch die Stromzuführungsdrähte nicht an gegenüberliegenden Stirnflächen dieses Wickels befestigt, sondern der Aufbau entspricht dem Aufbau der Fig. 1, der auch im Zusammenhang mit den Fig. 2 und 3 erläutert ist.

Auch ein solcher Wickelkondensator mit flachem Querschnitt des Wickels kann zunächst als Doppelwickel hergestellt werden, der längs der Linie 66, gegebenenfalls in der Mitte des vorhandenen metallfreien Isolierstreifens 67, in zwei einzelne Wickel 68 und 69 geteilt wird, so daß daraus zwei Kondensatoren hergestellt werden können. Zur Herstellung des Einschnittes 10 können mehrere solche flache Doppelwickel übereinandergestapelt und nach der stirnseitigen Metallisierung mit dem Einschnitt 10 versehen werden. Diese Herstellung kann als besonders rationell angesehen werden.

Zur Erzeugung der Isolierstreifen 15, 16, 42, 43 in den Metallbelegen 2, 3 erweisen sich Entmetallisierungen mit Laserstrahlen 74 und 75 als am günstigsten. Dazu wird die Aufnahmevorrichtung für den Wickeldorn mit einem Winkelgeber (Decoder) mechanisch gekoppelt. Der Decoder gibt synchron mit der Winkelumdrehung an eine Steuerelektronik elektrische Impulse ab. Die Steuerelektronik steuert nach vorgegebenem Programm die Laserimpulse derart, daß die Isolierstreifen in den Metallbelegungen der Bänder entstehen, wie es in den Fig. 3, 4 und 5 dargestellt ist.

Bei der Herstellung des Wickels sollten die Isolierstreifen 42, 43 vor dem Auflauf der Bänder 34, 35, 58, 59 in den Wickel 1 erzeugt werden, um eine Beschädigung der Metallbelege 2, 3 unter der jeweils oberen Lage, die bereits entmetallisiert ist, zu verhindern. In Fig. 4 sind deshalb die Laserstrahlen, angedeutet durch Pfeile 74 und 75, in einem seitlichen Abstand vom Wickeldorn 45 dargestellt. Durch die Notwendigkeit, die Herstellung der Isolierstreifen vor Auflauf auf den Wickel zu vollziehn, muß die Steuerelektronik so programmiert werden, daß die Isolierstreifen 42, 43 im gesamten Wickel richtig übereinander zu liegen kommen. Dazu genügt im allgemeinen eine Steuerung über die Windungszahl mit einer vorgegebenen mittleren Foliendicke.

Die Herstellung der Wickel und deren Weiterverarbeitung (Flachpressen bei Wickeln mit flachem Querschnitt, Auftragen der Metallschicht durch das Schoop-Verfahren, Anbringen der Stromzuführungselemente) kann gegenüber üblichen Wickelverfahren rationalisiert werden, wenn, wie in den Abbildungen 5 und 7 angedeutet, ein Doppelwickel aus entsprechend breiten Folien gewickelt wird. Durch einen isolierenden Sägeschnitt, bei dem die gereckte Kunststoffolie teilweise entreckt und der aus Ventilmetall, insbesondere Aluminium, bestehende Metallbelag, in einem schmalen Bereich isolierend gemacht wird und der ferner längs der Linie 66 bei durchgehend metallisierten Folien angebracht wird, wird der Doppelwickel in zwei Teilwickel 68, 69 zerteilt. Diese Teilwickel sind spiegelbildlich identisch. Für die Herstellung von Doppelwickeln sind vier Laserstrahlen notwendig, die jeweils jedes Band 58, 59 im Bereich der Ränder 60 und 61 mit den Isolierstreifen 42 und 43 versehen.

Da diese Wickel durch die beim Herstellen entstandene Lage der Isolierstreifen nach dem Entfernen des Dornes in definierter Radiallage, nämlich in Richtung der kleinen Achse 28 zusammengepreßt werden müssen, ist es günstig, entweder in bekannter Weise auf oval geformte Wickeldorne zu wickeln oder das Flachpressen mit der Abnahme vom Dorn in definierter Dornstellung zu kombinieren.

Bezugszeichenliste

1 verfestigter Wickel mit kreisrundem, ovalem oder flachem Querschnitt
2 Belegung auf dem Dielektrikumsband 4
3 Belegung auf dem Dielektrikumsband 5
4 Dielektrikumsband
5 Dielektrikumsband
6 Ende des Vorsprungs 8
7 Ende des Vorsprungs 9
8 Vorsprung
9 Vorsprung
10 Einschnitt im verfestigten Wickel 1
11 Fläche am Ende des Vorsprunges 8 im verfestigten Wickel 1
12 Fläche am Ende des Vorsprunges 9 im verfestigten Wickel 1
13 Metallschicht auf Fläche 11
14 Metallschicht auf Fläche 12
15 metallfreier Isolierstreifen
16 metallfreier Isolierstreifen
17 Tiefe des Einschnittes 10
18 Breite des Restmetallstreifens 20 auf dem Vorsprung 8
19 Breite des Restmetallstreifens 21 auf dem Vorsprung 9
20 Restmetallstreifen
21 Restmetallstreifen
22 Breite des metallfreien Isolierstreifens 15
23 Breite des metallfreien Isolierstreifens 16
24 Stromzuführungsdraht

25 Stromzuführungsdraht
26 Längsachse des Wickels 1
27 große Achse des ovalen Wickels 1
28 kleine Achse des ovalen Wickels 1
29 obere Stirnfläche des Wickels 1
30 metallfreie Streifen
31 metallfreie Streifen
32 Stromzuführung für den Einbau als Chip
33 Stromzuführung in Kappenform für den Einbau als Chip
34 oberes metallisiertes Kunststoffband
35 unteres metallisiertes Kunststoffband
36 Rand des Bandes 34
37 Rand des Bandes 35
38 gegenüberliegender Rand des Bandes 34
39 gegenüberliegender Rand des Bandes 35
40 Abstand zwischen Rand 38 und Isolierstreifen 42
41 Abstand zwischen Rand 39 und Isolierstreifen 43
42 Isolierstreifen auf Band 34
43 Isolierstreifen auf Band 35
44 Nocken zur Steuerung des Entmetallisierungsvorganges
45 Wickeldorn mit kreisrundem Querschnitt
46 Wickelrichtung
47 Ende der Isolierstreifen 42
48 Ende der Isolierstreifen 43
49 Anfang der Isolierstreifen 42
50 Anfang der Isolierstreifen 43
51 Länge der Isolierstsreifen 42
52 Länge der Isolierstreifen 43
53 Stirnfläche
54 Metallschicht
55 innerer Rand des Isolierstreifens 15
56 innerer Rand des Isolierstreifens 16
57 Wickeldorn mit ovalem Querschnitt
58 oberes metallisiertes Band
59 unteres metallisiertes Band
60 Ränder des Bandes 58
61 Ränder des Bandes 59
62 Stirnfläche
63 Stirnfläche
64 Mitte der Isolierstreifen 15 bzw. 42
65 Mitte der Isolierstreifen 16 bzw. 43
66 Schneidlinie
67 metallfreie Streifen
68 erster Kondensator
69 zweiter Kondensator
70 Pfeile für die Stromwege auf den Belegungen 2
71 Pfeile für die Stromwege auf den Belegungen 3
72 Auftrennlinie des Dielektrikumsbandes 4
73 Auftrennlinie des Dielektrikumsbandes 5
74 entmetallisierender Laserstrahl
75 entmetallisierender Laserstrahl

**Patentansprüche**

1. Elektrischer Kondensator aus einem verfestigten Wickel mit kreisrundem, ovalem oder flachem Querschnitt aus mit je einer regenerierfähig dünnen Metallschicht als Belegung versehen, miteinander verwickelten Dielektrikumsbändern aus gereckten Kunststoffolien, bei dem die Belegungen von Band zu Band abwechselnd zu unterschiedlichen Rändern reichen, die Flächen bilden, auf denen die gegenpoligen Belegungen mit zur Kontaktierung dienenden, aufgeschoopten Metallschichten miteinander verbunden sind, an denen Stromzuführungen befestigt sind, **gekennzeichnet durch** die Merkmale:

a) die Belegungen (2, 3) reichen von Band (4) zu Band (5) abwechselnd bis zu den Enden (7, 6) von zwei Vorsprüngen (9, 8), die durch einen Einschnitt (10) in einer Stirnfläche entstanden sind, der in Richtung der Längsachse (26) des Wickels etwa in der Mitte der Stirnfläche vorläuft,

b) die von den Enden (6, 7) der Vorsprünge (8, 9) im verfestigten Wickel (1) gebildeten Flächen (11, 12) sind mit den zur Kontaktierung dienenden Metallschichten (13, 14) versehen, c) alternierend von Dielektrikumsband (4) zu Dielektrikumsband (5) sind die Vorsprünge (8, 9) mit metallfreien Isolierstreifen (15 beziehungsweise 16) versehen, wobei die Tiefe (17) des Einschnittes (10) entweder größer ist als die Breire (18 beziehungsweise 19) des durch die Isoloerstreifen (15 beziehungweise 16) gebildeten Restmetallstreifens (20 beziehungsweise 21) oder mit den inneren Rändern (55, 56) der Isolierstreifen (15, 16) zusammenfällt oder vorzugsweise über diese Ränder (55, 56) hinaus in den Wickel (1) hineinreicht.

2. Elektrischer Kondensator nach Anspruch 1, **dadurch gekennzeichnet,** daß die die Dielektrikumsbänder (4, 5) bildenden gereckten Kunststoffolien 1 bis 15 μm dick sind.

3. Elektrischer Kondensator nach Anspruch 1 oder 2, **dadurch gekennzeichnet,** daß die Dielektrikumsbänder (4, 5) im Bereich der oberen Stirnfläche (29) des Wickels (1) metallfreie Streifen (30, 31) aufweisen.

4. Elektrischer Kondensator nach einem der Ansprüche 1, 2 oder 3, **dadurch gekennzeichnet,** daß an den Metallschichten (13, 14) Stromzuführungsdrähte (24, 25) befestigt sind, die sich in Richtung der Längsachse (26) des Wickels (1) erstrecken.

5. Elektrischer Kondensator nach einem der Ansprüche 1, 2 oder 3, **dadurch gekennzeichnet,** daß dür den Einbau des Kondensators in Chipbauweise an den Metallschichten (13 oder 14) Stromzuführungen (32 oder 33) aus lötfähigem Metall befestigt sind, die gegebenenfalls kappenförmig ausgebildet sind und die aus den Vorsprüngen (8 beziehungsweise 9) des Wickels (1) gebildeten Füße umschlieBen.

6. Elektrischer Kondensator nach einem der Ansprüche 1 bis 5, **dadurch gekennzeichnet,** daß seine Kapazität durch die Breite und/oder die Tiefe (17) des Einschnittes (10) auf einen gewünschten, eng tolerierten Wert abgeglichen ist.

7. Elektrischer Kondensator nach einem der Ansprüche 1 bis 6, **dadurch gekennzeichnet,** daß er Leerwindungen und Windungen als Decklagen enthält, auf denen die Metallisierung der Bänder (4, 5) durch wenigstens einen metallfreien, quer verlaufenden Isolierstreifen und durch in Wickelrichtung durchgehende metallfreie Isolierstreifen mit den Metallschichten (13, 14) auf den Vorsprüngen (8, 9) elektrisch nicht verbunden sind.

8. Verfahren zur Herstellung eines elektrischen Kondensators nach einem der Ansprüche 1 bis 7, bei dem einseitig wenigstens bis zu einem Rand metallisierte Bänder aus gereckten Kunststoffolien als Dielektrikum, insbesondere mit randseitigem Wellenschnitt, auf einen Wickeldorn mit kreisrundem, ovalem oder flachem Querschnitt gewickelt werden, der gebildete Wickel danach gegebenenfalls vom Wickeldorn befreit wird und der so entstandene Wickelkondensator mit Stirnkontaktschichten versehen wird, **gekennzeichnet durch** die Verfahrensschritte

a) es werden metallisierte Bänder (34, 35) auf den Wickeldorn gewickelt, die je an einem Rand (36, 37) gegebenenfalls durchgehende metallfreie Streifen (30, 31) aufweisen, während in den Bereichen der gegenüberliegenden Ränder (38, 39) und in Abständen (40, 41) hierzu in Wickelrichtung (46) intermittierende metallfreie Isolierstreifen (42 beziehungsweise 43) vor oder beim Aufwickeln derart erzeugt werden, daß die Isolierstreifen (42, 43) beim Aufwickeln auf die Trommel in einer Ebene senkrecht zur Wickelachse liegen und sowohl die Enden (47, 48) als auch die Anfänge (49, 50) der Isolierstreifen (42, 43) bis in den Bereich des späteren Einschnittes (10) hineinreichen oder diesen Bereich geringfügig überschreiten,

b) die Bänder (34, 35) werden beim Aufwickeln auf den Wikkeldorn (45, 57) so geführt und die vor oder beim Aufwickeln erzeugten Isolierstreifen (42, 43) werden hinsichtlich ihrer Länge (51, 52) derart bemessen, daß die Mitten (64) der Isolierstreifen (15, 42) des oberen Bandes (34) den Mitten (65) der Isolierstreifen (16, 43) des unteren Bandes (35) im Wickel (1) symmetrisch einander gegenüberstehen,

c) nach der Fertigstellung des Wickels wird auf die den Isolierstreifen (15, 16, 42, 43) benachbarte Stirnfläche (53, 62, 63) eine zur Kontaktierung dienende Metallschicht (54) aufgetragen und dann in diese Stirnfläche (53, 62, 63) senkrecht zur Verbindungslinie zwischen den Mitten (64 und 65) der Isolierstreifen (15, 16, 42 u nd 43) und in Richtung der Längsachse (26) des Wickels (1) ein Einschnitt (10) erzeugt, durch dessen Breite und Tiefe (17) die beiden Vorsprünge (8, 9) entstehen,

d) Fertigstellung der Wickelkondensatoren durch Anlegen einer erhöhten Spannung zum Ausheilen von Fehlstellen im Inneren des Wickels (1) und an den Rändern von Schneidkanten sowie Befestigung von Stromzuführungen (24, 25, 32, 33) an den Metallschichten (13, 14) der Vorsprünge (8, 9).

9. Verfahren nach Anspruch 8, **dadurch gekennzeichnet,** daß die beim Verfahrensschritt a) auf den Wickeldorn (45, 57) aufzuwickelnden Bänder (58, 59) jeweils an beiden Rändern (60, 61) mit den intermittierenden metallfreien Isolierstreifen (42, 43) versehen werden, so daß ein Wickel für zwei Kondensatoren entsteht, der nach Beendigung des Wickelvorganges in diese beiden Kondensatoren längs einer Schneidlinie (66) aufgeteilt wird.

10. Elektrischer Kondensator nach Anspruch 9, dadurch gekennzeichnet, daß die aufzuwickelnden metallisierten Bänder (58, 59) in der Mitte mit durchgehenden metallfreien Streifen (67) versehen sind.

11. Verfahren nach einem der Anprüche 8, 9 oder 10, dadurch gekennzeichnet, daß die Herstellung der intermittierenden metallfreien Isolierstreifen (42, beziehungsweise 43) auf den Bändern (34 beziehungsweise 35, 58 beziehungsweie 59) durch Anwendung von Laserstrahlen oder durch Einsatz von Abbrennrädern erfolgt, wobei zur Erzielung der gewünschten Lage und Länge der Isolierstreifen (42 beziehungsweise 43) untereinander und auch in bezug auf ihre Anordnung im Wickel bei zunehmendem Radius die Laserimpulse beziehungsweise die Abbrenntakte der Abbrennräder synchron mit der Drehung des Wickeldorns gesteuert werden.

12. Verfahren nach einem der Ansprüche 8 bis 11, dadurch gekennzeichnet, daß auf den Wickeldorn (45, 57) zunächst einige Leerwindungen der metallisierten Bänder (34, 35 58, 59) aufgewickelt werden, die im Bereich der späteren intermittierenden metallfreien Isolierstreifen (42, 43) mit durchgehenden metallfreien Isolierstreifen versehen werden, daß dann wenigstens ein quer über zumindest ein Band verlaufender metallfreier Isolierstreifen erzeugt wird und anschließend im gleichen Wickelvorgang die Herstellung der intermittierenden Isolierstreifen (42, 43) erfolgt, so daß die Metallschichten auf den Dielektrikumsbändern (34, 35, 58, 59) im Bereich der Leerwindungen mit den Restmetallstreifen (20, 21) im fertigen Kondensator elektrisch nicht mehr verbunden sind.

13. Verfahren nach einem der Ansprüche 8 bis 12, dadurch gekennzeichnet, daß zur Erzeugung von als Decklagen dienende Wickelungen um den Wickelkondensator auf den metallisierten Bändern (34, 35, 58, 59) anschließend an die intermittierenden metallfreien Isolierstreifen (42, 43) zunächst ein quer über wenigstens ein Band verlaufender metallfreier Isolierstreifen erzeugt wird und dann im Bereich der intermittierenden metallfreien Isolierstreifen im gleichen Wickelvorgang durchgehende metallfreie Isolierstreifen erzeugt werden, so daß die die Metallschichten auf den Dielektrikumsbändern (34, 35, 58, 59) im Bereich der Decklagen mit den Restmetallstreifen (20, 21) im fertigen Kondensator elektrisch nicht mehr verbunden sind.

## Claims

1. Electrical capacitor comprising a consolidated element, with circular, oval or flat cross-section, of dielectric tapes of oriented plastic foils, which dielectric tapes are each provided with a regenerative thin metal film as coating and are wound to one another, in which electrical capacitor the coatings reach, alternating from tape to tape, to different edges, which form faces on which the oppositely poled coatings are connected to one another with applied metal films, which serve to make contact and to which current feeds are attached, characterized by the features:

a) the coatings (2, 3) reach alternately from tape (4) to tape (5) up to the ends (7, 6) of two projections (9, 8), which have been produced by an incision (10) in an end face, which extends in the direction of the longitudinal axis (26) of the element, approximately in the middle of the end face,

b) the faces (11, 12) formed in the finished element (1) by the ends (6, 7) of the projections (8, 9) are provided with metal films (13, 14) serving to make contact,

c) alternating from dielectric tape (4) to dielectric tape (5), the projections (8, 9) are provided with metal-free insulating strips (15 or 16), the depth (17) of the incision (10) either being greater than the width (18 or 19) of the residual metal strip (20 or 21) formed by the insulating strips (15 or 16), or coinciding with the inner edges (55, 56) of the insulating strips (15, 16), or preferably reaching beyond these edges (55, 56) into the element (1).

2. Electrical capacitor according to Claim 1, characterized in that the oriented plastic foils forming the dielectric tapes (4, 5) are 1 to 15 μm thick.

3. Electrical capacitor according to Claim 1 or 2, characterized in that the dielectric tapes (4, 5) have metal-free strips (30, 31) in the region of the upper end face (29) of the element (1).

4. Electrical capacitor according to one of Claims 1, 2 or 3, characterized in that there are attached to the metal films (13, 14) lead-in wires (24, 25), which extend in the direction of the longitudinal axis (26) of the element (1).

5. Electrical capacitor according to one of Claims 1, 2 or 3, characterized in that for mounting the capacitor in the chip form of construction, there are attached to the metal films (13 or 14) current feeds (32 or 33) of solderable metal, which are constructed to be cap-shaped if necessary, and which surround the feet formed from the projections (8 or 9) of the element (1).

6. Electrical capacitor according to one of Claims 1 to 5, characterized in that its capacitance is calibrated to a desired, closely tolerated value by the width and/or the depth (17) of the incision (10).

7. Electrical capacitor according to one of Claims 1 to 6, characterized in that it contains empty turns and turns as facings, on which the metallic coating of the tapes (4, 5) is not electrically connected to the metal films (13, 14) on the projections (8, 9) by virtue of at least one metal-free, transversely extending insulating strip, and by virtue of metal-free insulating strips which are continuous in the winding direction.

8. Method of making an electrical capacitor according to one of Claims 1 to 7, in which oriented plastic tapes metallized on one side at least up to one edge and especially having a wavy section at the edge side are wound as dielectric onto a mandrel with circular, oval or flat cross-section, the element formed is thereafter freed from the mandrel if necessary, and the wound capacitor thus produced is provided with butt contact layers, characterized by the process steps

a) there are wound onto the mandrel metallized tapes (34, 35), which each have metal-free, if necessary continuous, strips (30, 31) at an edge (36, 37), while in the regions of the edges lying opposite (38, 39) and at spacings (40, 41) herefrom intermittent metal-free insulating strips (42 or 43) are produced in the winding direction before or during winding on in such a way that during winding onto the mandrel the insulating strips (42, 43) lie in a plane perpendicular to the winding axis and both the ends (47, 48) and also the starts (49, 50) of the insulating strips (42, 43) project as far as into the region of the later incision (10) or slightly overshoot this region,

b) during winding onto the mandrel (45, 57) the tapes (34, 35) are guided in such a way and the insulating strips (42, 43) produced before or during winding on are dimensioned with respect to their length (51, 52) in such a way that the middles (64) of the insulating strips (15, 42) of the upper tape (34) and the middles (65) of the insulating strips (16, 43) of the lower tape (35) are symmetrically opposite one another in the element (1), c) after the finishing of the element, a metal film (54) serving to make contact is applied onto the end face (53, 62, 63) adjacent to the insulating strips (15, 16, 42, 43), and then there is produced in this end face (53, 62, 63) perpendicular to the connecting line between the middles (64 and 65) of the insulating strips (15, 16, 42 and 43) and in the direction of the longitudinal axis (26) of the element (1) an incision (10), by means of the width and depth (17) of which the two projections (8, 9) are produced,

d) finishing of the wound capacitors by applying an increased voltage to annihilate defects in the interior of the element (1) and at the edges of cutting edges, as well as attaching of current feeds (24, 25, 32, 33) to the metal films (13, 14) of the projections (8, 9).

9. Method according to Claim 8, characterized in that during the process step a) tapes (58, 59) which are to be wound onto the mandrel (45, 57) are provided in each case at both edges (60, 61) with the intermittent metal-free insulating strips (42, 43), so that an element for two capacitors is produced, which is divided up along a line of section (66) into these two capacitors after cessation of the winding procedure.

10. Electrical capacitor according to Claim 9, characterized in that the metallized tapes (58, 59) to be wound on are provided in the middle with continuous metal-free strips (67).

11. Method according to one of Claims 8, 9 or 10, characterized in that the making of the intermittent metal-free insulating strips (42 or 43) on the tapes (34 or 35, 58 or 59) takes place through application of laser beams or through the use of burn-off wheels, the laser pulses or the burning-off cycles of the burn-off wheels being controlled synchronously with the rotation of the mandrel with increasing radius in order to obtain the desired position and length of the insulating strips (42 or 43) among one another and also in relation to their arrangement in the element.

12. Method according to one of Claims 8 to 11, characterized in that at first a few empty turns of the metallized tapes (34, 35, 58, 59) are wound onto the mandrel (45, 57), which are provided in the region of the later intermittent metal-free insulating strips (42, 43) with continuous metal-free insulating strips, and in that then at least one metal-free insulating strip extending transversely over at least one tape is produced, and the making of the intermittent insulating strips (42, 43) takes place subsequently in the same winding procedure, so that in the finished capacitor the metal films on the dielectric tapes (34, 35, 58, 59) are no longer electrically connected to the residual metal strips (20, 21) in the region of the empty turns.

13. Method according to one of Claims 8 to 12, characterized in that in order to produce turns, which serve as facings, around the wound capacitor on the metallized tapes (34, 35, 58, 59) adjoining the intermittent metal-free insulating strips (42, 43), at first a metal-free insulating strip extending transversely over at least one tape is produced, and then continuous metal-free insulating strips are produced in the same winding procedure in the region of the intermittent metal-free insulating strips, so that in the finished capacitor the metal films on the dielectric tapes (34, 35, 58, 59) are no longer electrically connected to the residual metal strips (20, 21) in the region of the facings.

**Revendications**

1. Condensateur électrique formé par un rouleau solidifié, possédant une section transversale circulaire, ovale ou plate et formé par des bandes de diélectrique comportant des couches métalliques minces régénérables respectives en tant qu'armatures, enroulées en étant imbriquées réciproquement et formées par des feuilles de matière plastique étirées, et dans lequel les armatures s'étendent, alternativement d'une bande à l'autre, jusqu'à des bords différents, qui forment des surfaces, sur lesquelles les armatures possédant des polarités opposées et comportant des couches métalliques utilisées pour l'établissement des contacts et déposées par schoopage sont reliées entre elles, et auxquelles sont fixés des éléments d'alimentation en courant, caractérisé par les particularités suivantes:

a) les armatures (2, 3) s'étendent, alternativement de bande (4) à bande (5), jusqu'aux extrémités (7, 6) de deux parties saillantes (9, 8), qui sont délimitées par une découpe (10) ménagée dans une face frontale et s'étendant, dans la direction de l'axe longitudinal (26) du rouleau, approximativement au centre de la face frontale,

b) les faces (11, 12), formées par les extrémités (6, 7) des parties saillantes (8, 9) dans le rouleau solidifié (1), sont pourvues des couches métalliques (13, 14) utilisées pour l'établissement du contact,

c) les parties saillantes (8, 9) comportent, en alternance de la bande de diélectrique (4) à la bande de diélectrique (5), des bandes isolantes (15 ou 16) exemptes de métal, auquel cas la profondeur (17) de la découpe (10) est supérieure à la largeur (18 ou 19) de la bande métallique résiduelle (20 ou 21), formée par les bandes isolantes (15 ou 16), ou bien s'étend jusqu'aux bords intérieurs (55, 56) des bandes isolantes (15, 16) ou, de préférence, au-delà de ces bords (55, 56), dans le rouleau (1).

2. Condensater électrique suivant la revendication 1, caractérisé par le fait que les feuilles en matière plastique étirées, qui forment des bandes de diélectrique (4, 5), possèdent une épaisseur comprise entre 1 et 15 µm.

3. Condensateur électrique suivant la revendication 1 ou 2, caractérisé par le fait que les bandes de diélectrique (4, 5) comportent des bandes (30, 31) exemptes de métal, dans la zone de la face frontale supérieure (29) du rouleau (1).

4. Condensateur électrique suivant l'une des revendications 1, 2 ou 3, caractérisé par le fait qu'aux couches métalliques (13, 14) sont fixés des fils (24, 25) d'alimentation en courant, qui s'étendent dans la direction de l'axe longitudinal (26) du rouleau (1).

5. Condensateur électrique suivant l'une des revendications 1, 2 ou 3, caractérisé par le fait que, pour le montage du condensateur selon une réalisation sur microplaquette, aux couches métalliques (13 ou 14) sont fixés des éléments d'alimentation en courant (32 ou 33), qui sont réalisés en un matériau soudable, possèdent éventuellement la forme de capuchons et entourent les pieds formés par les parties saillantes (8 ou 9) du rouleau (1).

6. Condensateur électrique suivant l'une des revendications 1 à 5, caractérisé par le fait que sa capacité est réglée, au moyen de la largeur et/ou de la profondeur (17) de la découpe (10), sur une valeur désirée, présentant une tolérance étroite.

7. Condensateur électrique suivant l'une des revendications 1 à 6, caractérisé par le fait qu'il contient des enroulements vides et des enroulements utilisés comme couches de revêtement, sur lesquels la métallisation des bandes (4, 5) n'est pas reliée électriquement aux couches métalliques (13, 14) situées sur les parties saillantes (8, 9), par suite de la présence d'au moins une bande isolante transversale, exempte de métal, et de bandes isolantes continues exemptes de métal, s'étendant dans la direction d'enroulement.

8. Procédé pour fabriquer un condensateur électrique suivant l'une des revendications 1 à 7, selon lequel on enroule des bandes, dont une face est métallisée au moins jusqu'à un bord et qui sont constituées par des feuilles étirées de matière plastique formant diélectrique, possédant notamment un bord découpé avec une forme ondulée, sur un mandrin d'enroulement possédant une section transversale circulaire, ovale ou plate, on retire ensuite éventuellement le rouleau formé, du mandrin d'enroulement et on équipe le condensateur enroulé, ainsi obtenu, de couches de contact frontales, caractérisé par les étapes opératoires suivantes:

a) on enroule, sur le mandrin d'enroulement, des bandes métallisées (34, 35) qui possèdent, respectivement au niveau d'un bord (36, 37), des bandes exemptes de métal (30, 31), éventuellement continues, tandis que dans les zones des bords opposés (38 et 39) et à certaines distances (40, 41) de ces bords, on forme, avant ou pendant l'enroulement, des bandes isolantes exemptes de métal (42 ou 43), qui s'étendent de façon discontinue dans la direction d'enroulement (46), de sorte que, lors de l'enroulement sur le tambour, les bandes isolantes (42, 43) sont situées dans un plan perpendiculaire à l'axe d'enroulement et qu'aussi bien les extrémités (47, 48) que les débuts (42, 50) des bandes isolantes (42, 43) s'étendent jusque dans la zone de la découpe (10), formée ultérieurement, ou débordent légèrement au-delà de cette zone, b) lors de l'enroulement sur le mandrin d'enroulement (45, 47), on guide les bandes (34, 35) et on règle la longueur (51, 52) des bandes isolantes (42, 43) formées avant ou lors de l'enroulement, de manière que les centres (64) des bandes isolantes (42) de la bande supérieure (34) soient situés symétriquement en vis-à-vis des centres (65) des bandes isolantes (16, 63) de la bande inférieure (35) dans le rouleau (1),

c) une fois achevé le rouleau, on dépose une couche métallique (54), utilisée pour l'établissement du contact, sur la face frontale (52, 62, 63) voisine des bandes isolantes (15, 16, 42, 43), puis, on aménage, dans cette face frontale (53, 62, 63), perpendiculairement à la droite joignant les centres (64 et 65) des bandes isolantes (15, 16, 42 et 43) et dans la direction de l'axe longitudinal (26) du rouleau (1), une découpe (10), qui délimite, par sa largeur et sa profondeur (17), les deux parties saillantes (8, 9),

d) on achève la fabrication des condensateurs enroulés en appliquant une tension accrue pour l'élimination par recuit de défauts à l'intérieur du rouleau (1) et au niveau des bords d'arêtes de coupe, et on fixe des éléments (24, 25, 32, 33) d'alimentation en courant aux couches métalliques (13, 14) des parties saillantes (8, 9).

9. Procédé suivant la revendication 8, caractérisé par le fait qu'on équipe les bandes (58, 59), qui doivent être enroulées sur le mandrin d'enroulement (45, 57) lors de l'étape opératoire (a), respectivement au niveau des deux bords (60, 61), de bandes isolantes intermittente (42, 43), exemptes de métal, de manière à former un rouleau pour deux condensateurs, que l'on subdivise, le long d'une ligne de coupe (66), pour l'obtention de ces deux condensateurs à la fin de l'opération d'enroulement.

10. Condensateur électrique suivant la revendication 9, caractérisé par le fait que les bandes métallisées (58, 59), devant être enroulées, comportent, dans leur partie médiane, des bandes continues exemptes de métal (67).

11. Procédé suivant l'une des revendications 8, 9 ou 10, caractérisé par le fait que la fabrication des bandes isolantes discontinues exemptes de métal (42 ou 43) sur les bandes (34 ou 35, 58 ou 59) est obtenue par utilisation de faisceaux laser ou de disques de brûlage, auquel cas, pour l'obtention de la position et de la longueur des bandes isolantes (42 ou 43) les unes par rapport aux autres et également en rapport avec leur disposition dans le rouleau, lorsque le rayon augmente, on commande les impulsions laser ou la cadence de brûlage des disques de brûlage en synchronisme avec la rotation du mandrin d'enroulement.

12. Procédé suivant l'une des revendications 8 à 11, caractérisé par le fait que sur le mandrin d'enroulement (45, 47), on enroule tout d'abord quelques enroulements vides des bandes métallisées (34, 35, 58, 59), dans lesquels on ménage des bandes isolantes continues exemptes de métal, dans la zone des bandes isolantes discontinues exemptes de métal (42, 43) formées ultérieurement, qu'on forme ensuite au moins une bande isolante exempte de métal disposée transversalement dans au moins une bande métallisée et qu'ensuite, la formation des bandes isolantes discontinues (42, 43) s'effectue lors de la même opération d'enroulement, de sorte que les couches métalliques ne sont plus reliées électriquement aux bornes métalliques résiduelles (20, 21), dans la zone des enroulements vides, dans le condensateur terminé.

13. Procédé suivant l'une des revendications 8 à 12, caractérisé par le fait que, pour la formation d'enroulements servant de couches de revêtement autour du condensateur enroulé, on forme tout d'abord, après les bandes isolantes discontinues exemptes de métal (42, 43), dans les bandes métallisées (34, 35, 58, 59) une bande isolante exempte de métal, s'étendant transversalement sur au moins une bande métallisée, puis on forme, lors de la même opération d'enroulement, des bandes isolantes continues exemptes de métal, dans la zone des bandes isolantes discontinues exemptes de métal, de sorte que les couches métalliques situées sur les bandes de diélectrique (34, 35, 58, 59) ne sont plus reliées électriquement aux bandes métalliques résiduelles (20, 21), dans la zone des couches de revêtement, dans le condensateur terminé.

FIG 1

FIG 2

FIG 3

# FIG 4

# FIG 5

## FIG 6

## FIG 7